(19) Europäisches Patentamt

European Patent Office

Office européen des brevets

(11) **EP 4 061 586 B1**

(12) **EUROPÄISCHE PATENTSCHRIFT**

(45) Veröffentlichungstag und Bekanntmachung des Hinweises auf die Patenterteilung:
**13.09.2023 Patentblatt 2023/37**

(21) Anmeldenummer: **20824085.3**

(22) Anmeldetag: **19.11.2020**

(51) Internationale Patentklassifikation (IPC):
**B25J 9/16** *(2006.01)*

(52) Gemeinsame Patentklassifikation (CPC):
**B25J 9/1643;** G05B 2219/39224;
G05B 2219/40343; G05B 2219/40349;
G05B 2219/40367; G05B 2219/40369

(86) Internationale Anmeldenummer:
**PCT/EP2020/082662**

(87) Internationale Veröffentlichungsnummer:
**WO 2021/099454 (27.05.2021 Gazette 2021/21)**

(54) **KRAFTMESSUNG UND KRAFTERZEUGUNG IN REDUNDANTEN ROBOTERMANIPULATOREN**

FORCE MEASUREMENT AND FORCE GENERATION IN REDUNDANT ROBOT MANIPULATORS

MESURE DE FORCE ET GÉNÉRATION DE FORCE DANS DES MANIPULATEURS ROBOTIQUES REDONDANTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.11.2019 DE 102019131400**

(43) Veröffentlichungstag der Anmeldung:
**28.09.2022 Patentblatt 2022/39**

(73) Patentinhaber: **Franka Emika GmbH**
**80797 München (DE)**

(72) Erfinder:
• **SPENNINGER, Andreas**
**85757 Karlsfeld (DE)**
• **MORGANTI, Marco**
**85748 Garching (DE)**
• **EL DINE, Kamal Mohy**
**80637 München (DE)**

(74) Vertreter: **Rösler Rasch van der Heide & Partner**
**Bodenseestraße 18**
**81241 München (DE)**

(56) Entgegenhaltungen:
**DE-A1-102015 009 151     DE-U1-202019 102 430**

• **FICUCIELLO FANNY ET AL: "Variable Impedance Control of Redundant Manipulators for Intuitive Human-Robot Physical Interaction", IEEE TRANSACTIONS ON ROBOTICS, IEEE SERVICE CENTER, PISCATAWAY, NJ, US, Bd. 31, Nr. 4, 1. August 2015 (2015-08-01) , Seiten 850-863, XP011665317, ISSN: 1552-3098, DOI: 10.1109/TRO.2015.2430053 [gefunden am 2015-08-04]**

**Beschreibung**

Die Erfindung betrifft ein Robotersystem mit einem Robotermanipulator mit einer Vielzahl von durch Gelenken miteinander verbundenen Gliedern mit zumindest teilweise zueinander redundanten Freiheitsgraden sowie ein Verfahren zum Betreiben eines solchen Robotermanipulators.

Robotersysteme mit redundanten Robotermanipulatoren und Verfahren zum Betreiben davon sind aus FICUCIELLO FANNY ET AL: "Variable Impedance Control of Redundant Manipulators for Intuitive Human-Robot Physical Interaction",IEEE TRANSACTIONS ON ROBOTICS, Bd. 31, Nr. 4, 1. August 2015, Seiten 850-863, als auch aus DE202019102430U1 und DE102015009151A1 bekannt.

Aufgabe der Erfindung ist es, ein Aufbringen und Messen einer in einer ausgewählten Richtung wirkenden Kraft und/oder eines Moments an einem distalen Ende des Robotermanipulators zu verbessern.

Die Erfindung ergibt sich aus den Merkmalen der unabhängigen Ansprüche. Vorteilhafte Weiterbildungen und Ausgestaltungen sind Gegenstand der abhängigen Ansprüche.

Ein erster Aspekt der Erfindung betrifft ein Robotersystem mit einem Robotermanipulator und mit einer Steuereinheit für den Robotermanipulator und mit einer Bedieneinheit, wobei der Robotermanipulator eine Vielzahl von durch Gelenke miteinander verbundenen Gliedern mit zumindest teilweise zueinander redundanten Freiheitsgraden aufweist, sodass zumindest eine Teilmenge der Glieder des Robotermanipulators in einem Nullraum ohne Änderung einer Position und/oder Orientierung eines distalen Endes des Robotermanipulators bewegbar ist, wobei die Bedieneinheit zum Erfassen einer Eingabe eines Anwenders bezüglich zumindest einer ausgewählten Richtung einer Kraft und/oder eines Moments am distalen Ende des Robotermanipulators und zum Übermitteln der erfassten Eingabe an die Steuereinheit ausgeführt ist, wobei die Steuereinheit dazu ausgeführt ist, zur jeweiligen ausgewählten Richtung zugehörige Komponenten einer Transponierten einer Jacobimatrix für eine vorgegebene Position und/oder Orientierung des distalen Endes des Robotermanipulators so im Nullraum zu ermitteln, dass eine erste Metrik auf Basis der Komponenten eines aus den folgenden Kriterien erfüllt: Ungleich null, größer als ein vorgegebener Grenzwert, maximal; und wobei die Steuereinheit dazu ausgeführt ist, den Robotermanipulator zum Bewegen der Teilmenge von Gliedern im Nullraum zum Einnehmen einer Pose gemäß den ermittelten Komponenten der Transponierten der Jacobimatrix anzusteuern.

Bevorzugt ist die Steuereinheit dazu ausgeführt, nach dem Erreichen der Pose gemäß den ermittelten Komponenten der Transponierten der Jacobimatrix eine am distalen Ende des Robotermanipulators auf die Umgebung wirkende externe Kraft und/oder Moment zu ermitteln und/oder Aktuatoren des Robotermanipulators zum Aufbringen einer externen Kraft und/oder Moment vom distalen Ende des Robotermanipulators auf die Umgebung anzusteuern.

Insbesondere ist die Steuereinheit mit dem Robotermanipulator verbunden und bevorzugt eine Steuereinheit des Robotermanipulators selbst, das heißt bevorzugt ist die Steuereinheit am Robotermanipulator angeordnet. Die Bedieneinheit ist außerdem mit der Steuereinheit verbunden, sodass Daten von der Bedieneinheit zu der Steuereinheit für den Robotermanipulator übermittelt werden können. Die Steuereinheit dient dabei insbesondere zur Ansteuerung von Aktuatoren des Robotermanipulators, um eine entsprechende Bewegung des Robotermanipulators zu ermöglichen.

Die Teilmenge der Glieder des Robotermanipulators ist in einem Nullraum ohne Änderung einer Position und/oder Orientierung eines distalen Endes des Robotermanipulators bewegbar. Das heißt, dass eine entsprechend hohe Anzahl an Gelenken mit zueinander redundanten Freiheitsgraden am Robotermanipulator vorgesehen ist, sodass unter Beibehalt der Position und/oder einer Orientierung eines distalen Endes des Robotermanipulators zumindest zwei der Glieder gegenüber einem erdfesten Koordinatensystem bewegbar sind. Typischerweise ist eine solche Redundanz über ein entsprechend bewegliches Ellbogengelenk des Robotermanipulators implementiert. Bevorzugt weist der Robotermanipulator an seinen Gelenken Drehmomentsensoren auf, wobei diese Drehmomentsensoren insbesondere dazu ausgeführt sind, ein jeweiliges Moment an einem jeweiligen Gelenk zu erfassen. Aus der Gesamtheit der erfassten Momente an den Gelenken des Robotermanipulators und mit der Kenntnis der aktuellen Pose des Robotermanipulators kann ein externer Kraftwinder ermittelt werden. Der Begriff der Pose bezeichnet dabei die Stellung der Glieder zueinander, das heißt die relative Position und insbesondere auch die relative Orientierung der Glieder zueinander.

Je nachdem, in welcher Pose sich die Teilmenge der Glieder in diesem Nullraum befindet, ist dies besser oder schlechter möglich. In einer so genannten singulären Pose kann keiner der Drehmomentsensoren an den Gelenken des Robotermanipulators ein entsprechendes Moment feststellen, da eine externe Kraft, die auf das distale Ende des Robotermanipulators wirkt, in die Basis bzw. den Sockel des Robotermanipulators geradlinig durch die Glieder durch die Gelenke ohne einen Hebelarm um die Gelenke zu erzeugen abgeleitet wird. Der gegenteilige Fall wäre, dass eine Kraft am distalen Ende des Robotermanipulators senkrecht zu einer gemeinsamen Längsachse der Glieder wirkt, sodass diese Kraft mit einem maximalen Hebelarm ein Moment an einem jeweiligen Gelenk des Robotermanipulators erzeugt. Das distale Ende des Robotermanipulators ist insbesondere durch einen Referenzpunkt an dem am weitesten distalen Glied des Robotermanipulators oder alternativ bevorzugt an einem Endeffektor des Robotermanipulators definiert.

Die Drehmomentsensoren an den Gelenken sind aus der Vielzahl der im Stand der Technik bekannten Drehmomentsensoren auswählbar. Insbesondere sind die Drehmomentsensoren mechanische Drehmomentsensoren, in denen eine Dehnung eines flexibel elastischen Materials, beispielsweise in Speichen des jeweiligen Drehmomentsensors, erfasst wird, wobei durch Kenntnis der Materialkonstanten auf ein anliegendes Moment geschlossen werden kann. Weiterhin insbesondere möglich ist es, eine in einem elektrischen Motor vorliegende Stromstärke zu messen und von diesem auf ein im Gelenk vorliegendes Moment zu schließen. Das gemessene Moment setzt sich typischerweise aus einer Vielzahl von Ursachen zusammen. Ein erster Teil des Moments ergibt sich aus den kinematischen Kräften und Momenten, insbesondere der Coriolisbeschleunigung sowie der Zentrifugalbeschleunigung. Ein weiterer Teil des gemessenen Moments ist einem Schwerkrafteinfluss zuzurechnen. Während an den Gelenken durch die Drehmomentsensoren die erfassten Momente gemessen werden, so führen diese durch Schwerkrafteinfluss und kinematisch verursachten Kräfte und Momente zu den erwarteten Momenten. Das heißt, abhängig von der aktuellen Bewegungsgeschwindigkeit und auch der aktuellen Beschleunigung des Robotermanipulators können diese Momente zusammen mit einem Schwerkrafteinfluss auf den Robotermanipulator der Theorie nach ermittelt werden und von den gemessenen Momenten an den jeweiligen Drehmomentsensor abgezogen werden. Dies erfolgt typischerweise in einem Impulsbeobachter, dessen Ergebnis die externen Momente sind.

Um von den so ermittelten externen Momenten auf einen externen Kraftwinder mit beliebigem Bezug zu schließen, ist die Pseudoinverse der transformierten Jacobimatrix erforderlich. Die Pseudoinverse (anstelle der Inversen selbst) ist insbesondere dann erforderlich, wenn es sich bei dem Robotermanipulator um einen redundanten Manipulator handelt, das heißt, dass zumindest zwei der die Glieder verbindenden Gelenke zueinander redundante Freiheitsgrade aufweisen. In einem redundanten Robotermanipulator können insbesondere Glieder des Robotermanipulators bewegt werden, ohne dass sich eine Orientierung und eine Position des Endeffektors des Robotermanipulators bewegen würde. Die Jacobimatrix verknüpft grundsätzlich die Winkelgeschwindigkeiten an den Gelenken zu der translatorischen und rotatorischen Geschwindigkeit an einem beliebigen Punkt, insbesondere an dem distalen Ende des Robotermanipulators. Prinzipiell ist es jedoch unerheblich, ob tatsächlich Geschwindigkeiten betrachtet werden; so kann die Jacobimatrix auch für den Zusammenhang zwischen den Momenten an den Gelenken und den Kräften und Momenten an dem jeweiligen beliebigen Punkt verwendet werden.

Die Transponierte der Jacobimatrix $J$, nämlich $J^T$, vermittelt zwischen dem externen Kraftwinder $F_{ext}$ zu dem ermittelten externen Drehmoment $\tau_{ext}$ wie folgt:

$$\tau_{ext} = J^T F_{ext}$$

In dieser Gleichung ist ersichtlich, dass der externe Kraftwinder, der typischerweise in kartesischen Koordinaten bezüglich eines erdfesten kartesischen Koordinatensystems drei Komponenten für eine externe translatorische Kraft und drei weitere Komponenten für ein externes Moment aufweist, durch entsprechende Matrixmultiplikation mit der Transponierten der Jacobimatrix auf den Vektor der externen Drehmomente abgebildet wird, wobei der Vektor der externen Drehmomente jeweils auf Drehmomente in den Gelenken des Robotermanipulators bezogen ist. Vorteilhaft wird auf den ersten Aspekt der Erfindung erreicht, dass ausgewählte Richtungen des externen Kraftwinders $F_{ext}$ bei ihrer Abbildung durch die Transformierte der Jacobimatrix $J^T$ auf den Vektor der Gelenkmomente nicht auf null abgebildet werden, was in einer solchen oben erläuterten singulären Pose der Fall wäre. Dann wäre insbesondere die jeweilige zur entsprechenden Richtung gehörende Spalte der Transponierten der Jacobimatrix insgesamt null oder zumindest eine Vektornorm dieser jeweiligen Spalte gleich Null oder nahe null. Somit würde der externe Kraftwinder in dieser ausgewählten Richtung gemäß obiger Gleichung auf entsprechende Null-Werte im Vektor der Gelenkmomente abgebildet. Durch jede der möglichen Bedingungen für die erste Metrik "Ungleich null, größer als ein vorgegebener Grenzwert, oder maximal", wird jedoch diese Abbildung auf Null verhindert, bzw. optimiert, je nach Bedingung für die erste Metrik.

Es ist daher eine vorteilhafte Wirkung der Erfindung, dass vom Anwender ausgewählte Richtungen von Kräften und Momenten erfasst werden und die Pose des Robotermanipulators in seinem Nullraum so ausgerichtet wird, dass in genau diesen Richtungen vom Robotermanipulator an seinem distalen Ende besser eine Kraft bzw. ein Moment auf die Umgebung des Robotermanipulators aufgebracht werden kann, und gleichzeitig, dass in dieser jeweiligen ausgewählten Richtung eine externe Kraft bzw. ein externes Moment von der Umgebung auf das distale Ende des Robotermanipulators besser ermittelt werden kann, insbesondere über die Drehmomentermittlung an den Gelenken des Robotermanipulators.

Gemäß einer vorteilhaften Ausführungsform sind die zur jeweiligen ausgewählten Richtung zugehörigen Komponenten der Transponierten der Jacobimatrix in einer jeweiligen Spalte der Transponierten der Jacobimatrix aufgeführt, wobei die erste Metrik eine Vektornorm der jeweiligen Spalte ist. Als Vektornorm wird bevorzugt die 2-Norm verwendet. Die Bildung einer Vektornorm bietet vorteilhaft eine schnelle Berechnung und eine intuitiv nachvollziehbare Kennzahl für ein Maß der in einer jeweiligen Spalte der Transponierten der Jacobimatrix aufgeführten Komponenten, die genau eine Komponente des externen Kraftwinders auf den Vektor der Gelenkmomente und damit den Vektor der externen Drehmomente bezüglich der Gelenke (siehe oben $\tau_{ext}$) abbildet.

Gemäß einer weiteren vorteilhaften Ausführungsform ist die Steuereinheit dazu ausgeführt, die jeweiligen Komponenten der Transponierten der Jacobimatrix auf Basis einer gradientenbasierten Suche mit der jeweiligen Vektornorm als umgekehrte Kostenfunktion zu ermitteln. Die umgekehrte Kostenfunktion kann auch Zielfunktion genannt werden, da diese umgekehrte Kostenfunktion maximiert werden soll, anders als eine echte Kostenfunktion, die üblicherweise bei einer Optimierung minimiert werden soll. Es ist also Zweck dieser Ausführungsform, mit einer gradientenbasierten Suche die jeweilige Vektornorm, die der jeweiligen ausgewählten Richtung zugeordnet ist, zu maximieren. Eine gradientenbasierte Suche ermittelt iterativ an verschiedenen Suchpunkten der umgekehrten Kostenfunktion einen Gradienten, wobei der jeweils nächste Suchpunkt durch den Gradienten im Sinne des steilsten Aufstieges ermittelt wird. Eine solche gradientenbasierte Suche ist ein klassisches Verfahren aus dem Gebiet der nichtlinearen Optimierung und stellt ein iteratives Verfahren für Optimierungsprobleme dar, die nicht analytisch auf Anhieb lösbar sind. Vorteilhaft ist mit der gradientenbasierten Suche ein einfacher Algorithmus implementiert, um mit ausreichender Konvergenz zu einer entsprechenden Lösung zu gelangen.

Gemäß einer weiteren vorteilhaften Ausführungsform ist die Steuereinheit dazu ausgeführt, zu ermitteln, ob vom Anwender an der Bedieneinheit eine Auswahl vorgenommen wurde, und beim Fehlen einer Auswahl durch den Anwender alle Komponenten der Transponierten der Jacobimatrix im Nullraum so zu ermitteln, dass eine zweite Metrik auf Basis aller Komponenten der Transponierten der Jacobimatrix eines aus den folgenden Kriterien erfüllt: Ungleich null, größer als ein vorgegebener Grenzwert, maximal. Der erste Aspekt der Erfindung wird gemäß dieser Ausführungsform dahingehend erweitert, dass geprüft wird, ob überhaupt eine Auswahl bezüglich einer solchen Richtung durch einen Anwender vorgenommen wurde. Wird eine solche Auswahl vom Anwender vorgenommen, so können die entsprechenden Komponenten der jeweiligen diesen Richtungen zugeordneten Spalten der Transponierten der Jacobimatrix in einem entsprechenden Abstand von Null gewählt werden. Wird jedoch keine Richtung vorgegeben, so ist die Optimierung der Transponierten der Jacobimatrix als Ganzes wünschenswert, und wird gemäß dieser Ausführungsform als Ganzes so optimiert, dass möglichst eine singuläre Pose des Robotermanipulators gänzlich ausgeschlossen wird und in allen Richtungen eine externe Kraft bzw. ein externes Moment auf den Vektor der Gelenkmomente ausreichend abgebildet wird, um zuverlässig ein externes Moment oder eine externe Kraft aus einem externen Kraftwinder durch Drehmomentsensoren in den Gelenken des Robotermanipulators zu erfassen.

Gemäß einer weiteren vorteilhaften Ausführungsform ist die Steuereinheit dazu ausgeführt, die jeweiligen Komponenten der Transponierten der Jacobimatrix auf Basis einer gradientenbasierten Suche mit der Determinanten des Matrixprodukts aus der Jacobimatrix und der Transponierten der Jacobimatrix als umgekehrte Kostenfunktion zu ermitteln. Bevorzugt wird die Suchrichtung aus dem Gradienten, das heißt der lokalen Ableitung nach den Gelenkwinkeln, des folgenden Terms ermittelt:

$$det(JJ^T) \cdot trace\left((JJ^T)^{-1}\left(\frac{\partial J}{\partial q_t^i}J^T + J\left(\frac{\partial J}{\partial q_t^i}\right)^T\right)\right)$$

Alternativ bevorzugt wird die Suchrichtung aus dem Gradienten des Terms $\sqrt{det(JJ^T)}$, oder weiterhin alternativ bevorzugt aus dem Gradienten des Terms $\|J^T\|$, das heißt aus der Norm der Transponierten der Jacobimatrix ermittelt.

Gemäß einer weiteren vorteilhaften Ausführungsform ist die Steuereinheit dazu ausgeführt, den Robotermanipulator zum Bewegen der Teilmenge der Glieder im Nullraum zum Einnehmen der Pose gemäß der ermittelten Komponenten der Transponierten der Jacobimatrix bei oder nach dem Erreichen des distalen Endes des Robotermanipulators der vorgegebenen Position und/oder Orientierung anzusteuern. Gemäß dieser Ausführungsform wird zuerst das distale Ende des Robotermanipulators an die vorgegebenen Position und/oder Orientierung verfahren, und anschließend die Teilmenge der Glieder in ihrem Nullraum entsprechend der jeweiligen ermittelten Komponenten der Transportierten der Jacobimatrix ausgerichtet.

Gemäß einer weiteren vorteilhaften Ausführungsform ist die Steuereinheit dazu ausgeführt, den Robotermanipulator zum Bewegen der Teilmenge der Glieder im Nullraum zum Einnehmen der Pose gemäß der ermittelten Komponenten der Transponierten der Jacobimatrix während des Anfahrens des distalen Endes des Robotermanipulators zu der vorgegebenen Position und/oder Orientierung anzusteuern. Während gemäß der vorhergehenden Ausführungsform eine klare Trennung zwischen dem Anfahren des distalen Endes des Robotermanipulators an die vorgegebene Position und/oder Orientierung mit der damit einhergehenden Bahnplanung und der Ausrichtung der Teilmenge der Glieder in ihrem Nullraum erfolgt, wird gemäß dieser Ausführungsform das Ausrichten der Glieder in ihrem Nullraum in die Bahnplanung miteinbezogen, sodass alle Glieder des Robotermanipulators, auch diejenigen die zueinander in redundanten Freiheitsgraden bewegbar sind, entsprechend angesteuert werden. Vorteilhaft befindet sich der Robotermanipulator und insbesondere die Teilmenge der Glieder in ihrem Nullraum in einer solchen Pose, dass bereits beim Erreichen des distalen Endes des Robotermanipulators an der vorgegebenen Position und/oder Orientierung optimiert externe Kräfte bzw. Momente erfasst oder aufgebracht werden können.

Gemäß einer weiteren vorteilhaften Ausführungsform ist die Steuereinheit dazu ausgeführt, die zur jeweiligen ausgewählten Richtung zugehörigen Komponenten der Transponierten der Jacobimatrix durch Abfahren einer Vielzahl von Posen durch die Teilmenge der Glieder im Nullraum und durch Ermitteln einer jeweiligen Transponierten der für eine jeweilige Pose aktuellen Jacobimatrix und durch Vergleichen der Transponierten der Jacobimatritzen für die Vielzahl der Posen miteinander und durch Auswählen einer der Transponierten der Jacobimatritzen gemäß der ersten oder zweiten Metrik zu ermitteln. Diese Ausführungsform entspricht einem empirischen Vorgehen, bei dem durch ein physikalisches Suchverfahren aktiv eine entsprechende Pose gesucht wird, für jede dieser Posen eine Transportierte der Jacobimatritzen berechnet wird, eine jeweilige Transponierte der Jacobimatritzen bezüglich ihrer entsprechenden Spalten (zugehörig zu den ausgewählten Richtungen) auf die erste Metrik bzw. zweite Metrik untersucht und eine Pose mit einer günstigen ersten Metrik bzw. günstigen zweiten Metrik ausgewählt wird.

Gemäß einer weiteren vorteilhaften Ausführungsform ist die Steuereinheit dazu ausgeführt, die zur jeweiligen ausgewählten Richtung zugehörigen Komponenten der Transponierten der Jacobimatrix durch Simulation einer Vielzahl von Posen der Teilmenge der Glieder im Nullraum und durch Ermitteln einer jeweiligen Transponierten der für eine jeweilige Pose aktuellen Jacobimatrix und durch Vergleichen der Transponierten der Jacobimatritzen für die Vielzahl der Posen miteinander und durch Auswählen einer der Transponierten der Jacobimatritzen gemäß der ersten oder zweiten Metrik zu ermitteln. Im Gegensatz zur vorhergehenden Ausführungsform, bei der die Teilmenge der Glieder in ihrem Nullraum tatsächlich bewegt wird, findet gemäß dieser Ausführungsform nur eine Simulation eines solchen Vorgehens statt, sodass vorteilhaft die entsprechende Pose in kürzerer Zeit gefunden werden kann.

Ein weiterer Aspekt der Erfindung betrifft ein Verfahren zum Betreiben eines Robotermanipulators mit einer Vielzahl von durch Gelenken miteinander verbundenen Gliedern mit zumindest teilweise zueinander redundanten Freiheitsgraden, sodass zumindest eine Teilmenge der Glieder des Robotermanipulators in einem Nullraum ohne Änderung einer Position und/oder Orientierung eines distalen Endes des Robotermanipulators bewegbar ist, aufweisend die Schritte:

- Erfassen einer Eingabe eines Anwenders bezüglich zumindest einer ausgewählten Richtung einer Kraft und/oder eines Moments an dem distalen Ende des Robotermanipulators durch eine mit der Steuereinheit verbundene Bedieneinheit und Übermitteln der erfassten Eingabe an die Steuereinheit,
- Ermitteln von zur jeweiligen ausgewählten Richtung zugehörigen Komponenten einer Transponierten einer Jacobimatrix für eine vorgegebene Position und/oder Orientierung des distalen Endes des Robotermanipulators im Nullraum so, dass eine erste Metrik auf Basis der Komponenten eines aus den folgenden Kriterien erfüllt: Ungleich null, größer als ein vorgegebener Grenzwert, maximal; und
- Ansteuern des Robotermanipulators zum Bewegen der Teilmenge von Gliedern im Nullraum zum Einnehmen einer Pose gemäß der ermittelten Komponenten der Transponierten der Jacobimatrix durch die Steuereinheit.

Bevorzugt weist das Verfahren weiterhin den Schritt auf:

- Nach dem Erreichen der Pose gemäß den ermittelten Komponenten der Transponierten der Jacobimatrix: Ermitteln einer am distalen Ende des Robotermanipulators auf die Umgebung wirkende externe Kraft und/oder Moment, und/oder Ansteuern von Aktuatoren des Robotermanipulators zum Aufbringen einer externen Kraft und/oder Moment vom distalen Ende des Robotermanipulators auf die Umgebung.

Vorteile und bevorzugte Weiterbildungen des vorgeschlagenen Verfahrens ergeben sich durch eine analoge und sinngemäße Übertragung der im Zusammenhang mit dem vorgeschlagenen Robotersystem vorstehend gemachten Ausführungen.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen.

Es zeigen:

Fig. 1 ein Robotersystem gemäß einem Ausführungsbeispiel der Erfindung, und

Fig. 2 ein Verfahren gemäß einem weiteren Ausführungsbeispiel der Erfindung.

Die Darstellungen in den Figuren sind schematisch und nicht maßstäblich.

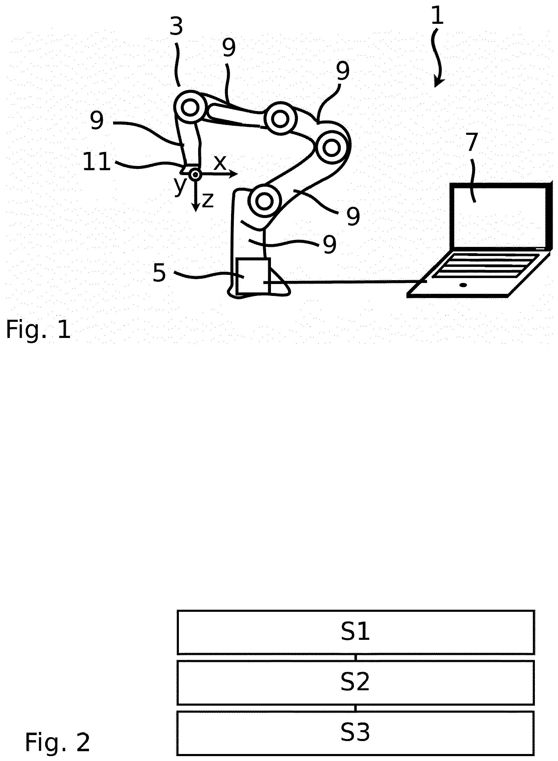

Fig. 1 zeigt ein Robotersystem 1 mit einem Robotermanipulator 3 und mit einer Bedieneinheit 7, wobei der Robotermanipulator 3 eine Steuereinheit 5 aufweist. Der Robotermanipulator 3 weist eine Vielzahl von durch Gelenke miteinander verbundenen Gliedern 9 mit teilweise zueinander redundanten Freiheitsgraden auf. Somit ist eine Teilmenge der Glieder 9 des Robotermanipulators 3 in einem Nullraum bewegbar, das heißt, ohne dass eine Änderung einer Position eines distalen Endes 11 des Robotermanipulators 3 erfolgt. Die Bedieneinheit 7 ist ein Anwenderrechner, der mit der Steuereinheit 5 des Robotermanipulators 3 verbunden ist und dient zum Erfassen einer Eingabe eines Anwenders bezüglich zumindest einer ausgewählten Richtung einer Kraft oder eines Moments, welche am distalen Ende 11 des Robotermanipulators 3 angreift, und zum Übermitteln der erfassten Eingabe an die Steuereinheit 5. Die Steuereinheit 5 ermittelt zur jeweiligen ausgewählten Richtung zugehörige Komponenten einer Transponierten einer Jacobimatrix für eine vorgegebene Position des distalen Endes 11 des Robotermanipulators 3 so im Nullraum, dass eine erste Metrik auf Basis der Komponenten das Kriterium "größer als ein vorgegebener Grenzwert" erfüllt ist. An den Gelenken des Robotermanipulators 3 sind Drehmomentsensoren angeordnet, die in ihrer Gesamtheit einen Vektor von Gelenkmomenten am Robotermanipulator 3 erfassen. Aus den Komponenten dieses Vektors werden diejenigen Anteile ermittelt, die zu einem Vektor externer Drehmomente gehören; dies erfolgt durch Subtraktion der erwarteten Momente, insbesondere die durch Schwerkraft oder dynamische Momente aus Beschleunigungen am Robotermanipulator 3 entstehen. Die externen Drehmomente können dabei von einer externen Kraft am distalen Ende des Manipulator 3 oder auch von einem externen Moment am distalen Ende des Robotermanipulators 3 stammen. Damit an den Drehmomentsensoren auch ein entsprechendes Moment erfasst werden kann, muss auch ein solches Moment am jeweiligen Gelenk des Robotermanipulators 3 vorliegen. Dabei zeigt der folgende Zusammenhang, wie die Komponenten des externen Kraftwinders $F_{ext}$ auf den Vektor der externen Drehmomente $\tau_{ext}$ durch die Transponierte der Jacobimatrix $J^T$ abgebildet werden:

$$\tau_{ext} = J^T F_{ext}$$

Wird nun vom Anwender die y-Richtung bezüglich einer Kraft ausgewählt, die der fünften Komponente des Vektors des externen Kraftwinders entspricht, so ist dementsprechend die fünfte Spalte der Transponierten der Jacobimatrix zu optimieren und eine Norm der fünften Spalte als erste Metrik für diese fünfte Spalte möglichst fern von null zu halten, das heißt, zu maximieren. Hierbei ist es vom Anwender einstellbar, ob als Norm eine Zwei-Norm oder eine Unendlich-Norm verwendet wird. Obige Gleichung ergibt sich damit zu:

$$\tau_{ext} = \begin{matrix} J_{11}^T J_{12}^T J_{13}^T J_{14}^T & J_{15}^T & J_{16}^T \\ J_{21}^T J_{22}^T J_{23}^T J_{24}^T & J_{25}^T & J_{26}^T \\ J_{31}^T J_{32}^T J_{33}^T J_{34}^T & J_{35}^T & J_{36}^T \\ J_{41}^T J_{42}^T J_{43}^T J_{44}^T [J_{45}^T] J_{46}^T \\ J_{51}^T J_{52}^T J_{53}^T J_{54}^T & J_{55}^T & J_{56}^T \\ J_{61}^T J_{62}^T J_{63}^T J_{64}^T & J_{65}^T & J_{66}^T \\ J_{71}^T J_{72}^T J_{73}^T J_{74}^T & J_{75}^T & J_{76}^T \end{matrix} \cdot \begin{pmatrix} \cdot \\ \cdot \\ \cdot \\ \cdot \\ F_y \\ \cdot \end{pmatrix}$$

Wird ferner vom Anwender die x-Richtung und die z-Richtung als jeweilige interessierende Richtung für Kräfte ausgewählt, wobei die x-Richtung und die z-Richtung einer Kraft am distalen Ende des Robotermanipulators 3 die vierte und die sechste Komponente Vektors des externen Kraftwinders belegen, so sind entsprechend die vierte und die sechste Spalte der Transponierten der Jacobimatrix entsprechend zu maximieren:

$$\tau_{ext} = \begin{matrix} J_{11}^T J_{12}^T J_{13}^T & J_{14}^T & J_{15}^T & J_{16}^T \\ J_{21}^T J_{22}^T J_{23}^T & J_{24}^T & J_{25}^T & J_{26}^T \\ J_{31}^T J_{32}^T J_{33}^T & J_{34}^T & J_{35}^T & J_{36}^T \\ J_{41}^T J_{42}^T J_{43}^T [J_{44}^T] J_{45}^T [J_{46}^T] \\ J_{51}^T J_{52}^T J_{53}^T & J_{54}^T & J_{55}^T & J_{56}^T \\ J_{61}^T J_{62}^T J_{63}^T & J_{64}^T & J_{65}^T & J_{66}^T \\ J_{71}^T J_{72}^T J_{73}^T & J_{74}^T & J_{75}^T & J_{76}^T \end{matrix} \cdot \begin{pmatrix} \cdot \\ \cdot \\ \cdot \\ F_x \\ \cdot \\ F_z \end{pmatrix}$$

Die Steuereinheit 5 ermittelt dabei die jeweiligen Komponenten der Transponierten der Jacobimatrix auf Basis einer gradientenbasierten Suche mit der jeweiligen Vektornorm als umgekehrte Kostenfunktion.

Fig. 2 zeigt ein Verfahren zum Betreiben eines Robotermanipulators 3 mit einer Vielzahl von durch Gelenken miteinander verbundenen Gliedern 9 mit zumindest teilweise zueinander redundanten Freiheitsgraden, sodass zumindest eine Teilmenge der Glieder 9 des Robotermanipulators 3 in einem Nullraum ohne Änderung einer Position und/oder Orientierung eines distalen Endes 11 des Robotermanipulators 3 bewegbar ist, aufweisend die Schritte:

- Erfassen S1 einer Eingabe eines Anwenders bezüglich zumindest einer ausgewählten Richtung einer Kraft und/oder eines Moments an dem distalen Ende 11 des Robotermanipulators 3 durch eine mit der Steuereinheit 5 verbundene Bedieneinheit 7 und Übermitteln der erfassten Eingabe an die Steuereinheit 5,
- Ermitteln S2 von zur jeweiligen ausgewählten Richtung zugehörigen Komponenten einer Transponierten einer Jacobimatrix für eine vorgegebene Position und/oder Orientierung des distalen Endes 11 des Robotermanipulators 3 im Nullraum so, dass eine erste Metrik auf Basis der Komponenten eines aus den folgenden Kriterien erfüllt: Ungleich null, größer als ein vorgegebener Grenzwert, maximal; und
- Ansteuern S3 des Robotermanipulators 3 zum Bewegen der Teilmenge von Gliedern 9 im Nullraum zum Einnehmen einer Pose gemäß der ermittelten Komponenten der Transponierten der Jacobimatrix durch die Steuereinheit 5.

Obwohl die Erfindung im Detail durch bevorzugte Ausführungsbeispiele näher illustriert und erläutert wurde, so ist die Erfindung nicht durch die offenbarten Beispiele eingeschränkt und andere Variationen können vom Fachmann hieraus abgeleitet werden, ohne den Schutzumfang der Erfindung zu verlassen, der durch die Ansprüche definiert wird. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen, beispielsweise hinsichtlich der Funktion oder der Anordnung einzelner, in einer beispielhaften Ausführungsform genannter Elemente, vornehmen kann, ohne den Schutzbereich zu verlassen, der durch die Ansprüche definiert wird.

Bezugszeichenliste

| | |
|---|---|
| 1 | Robotersystem |
| 3 | Robotermanipulator |
| 5 | Steuereinheit |
| 7 | Bedieneinheit |
| 9 | Glieder |
| 11 | distales Ende des Robotermanipulators |
| | |
| S1 | Erfassen |
| S2 | Ermitteln |
| S3 | Ansteuern |

**Patentansprüche**

1. Robotersystem (1) mit einem Robotermanipulator (3) und mit einer Steuereinheit (5) für den Robotermanipulator (3) und mit einer Bedieneinheit (7),

   wobei der Robotermanipulator (3) eine Vielzahl von durch Gelenke miteinander verbundenen Gliedern (9) mit zumindest teilweise zueinander redundanten Freiheitsgraden aufweist, sodass zumindest eine Teilmenge der Glieder (9) des Robotermanipulators (3) in einem Nullraum ohne Änderung einer Position und/oder Orientierung eines distalen Endes (11) des Robotermanipulators (3) bewegbar ist,
   wobei die Bedieneinheit (7) zum Erfassen einer Eingabe eines Anwenders bezüglich zumindest einer ausgewählten Richtung einer Kraft und/oder eines Moments am distalen Ende (11) des Robotermanipulators (3) und zum Übermitteln der erfassten Eingabe an die Steuereinheit (5) ausgeführt ist,
   **dadurch gekennzeichnet, dass**
   die Steuereinheit (5) dazu ausgeführt ist, zur jeweiligen ausgewählten Richtung zugehörige Komponenten einer Transponierten einer Jacobimatrix für eine vorgegebene Position und/oder Orientierung des distalen Endes (11) des Robotermanipulators (3) so im Nullraum zu ermitteln, dass eine erste Metrik auf Basis der Komponenten eines aus den folgenden Kriterien erfüllt: Ungleich null, größer als ein vorgegebener Grenzwert, maximal; und

dass die Steuereinheit (5) dazu ausgeführt ist, den Robotermanipulator (3) zum Bewegen der Teilmenge von Gliedern (9) im Nullraum zum Einnehmen einer Pose gemäß den ermittelten Komponenten der Transponierten der Jacobimatrix anzusteuern.

2. Robotersystem (1) nach Anspruch 1,
wobei die zur jeweiligen ausgewählten Richtung zugehörigen Komponenten der Transponierten der Jacobimatrix in einer jeweiligen Spalte der Transponierten der Jacobimatrix aufgeführt sind, wobei die erste Metrik eine Vektornorm der jeweiligen Spalte ist.

3. Robotersystem (1) nach Anspruch 2,
wobei die Steuereinheit (5) dazu ausgeführt ist, die jeweiligen Komponenten der Transponierten der Jacobimatrix auf Basis einer gradientenbasierten Suche mit der jeweiligen Vektornorm als umgekehrte Kostenfunktion zu ermitteln.

4. Robotersystem (1) nach einem der vorhergehenden Ansprüche,
wobei die Steuereinheit (5) dazu ausgeführt ist, zu ermitteln, ob vom Anwender an der Bedieneinheit (7) eine Auswahl vorgenommen wurde, und beim Fehlen einer Auswahl durch den Anwender alle Komponenten der Transponierten der Jacobimatrix im Nullraum so zu ermitteln, dass eine zweite Metrik auf Basis aller Komponenten der Transponierten der Jacobimatrix eines aus den folgenden Kriterien erfüllt: Ungleich null, größer als ein vorgegebener Grenzwert, maximal.

5. Robotersystem (1) nach Anspruch 4,
wobei die Steuereinheit (5) dazu ausgeführt ist, die jeweiligen Komponenten der Transponierten der Jacobimatrix auf Basis einer gradientenbasierten Suche mit der Determinanten des Matrixprodukts aus der Jacobimatrix und der Transponierten der Jacobimatrix als umgekehrte Kostenfunktion zu ermitteln.

6. Robotersystem (1) nach einem der Ansprüche 1 bis 5,
wobei die Steuereinheit (5) dazu ausgeführt ist, den Robotermanipulator (3) zum Bewegen der Teilmenge der Glieder (9) im Nullraum zum Einnehmen der Pose gemäß der ermittelten Komponenten der Transponierten der Jacobimatrix bei oder nach dem Erreichen des distalen Endes (11) des Robotermanipulators (3) der vorgegebenen Position und/oder Orientierung anzusteuern.

7. Robotersystem (1) nach einem der Ansprüche 1 bis 5,
wobei die Steuereinheit (5) dazu ausgeführt ist, den Robotermanipulator (3) zum Bewegen der Teilmenge der Glieder (9) im Nullraum zum Einnehmen der Pose gemäß der ermittelten Komponenten der Transponierten der Jacobimatrix während des Anfahrens des distalen Endes (11) des Robotermanipulators (3) zu der vorgegebenen Position und/oder Orientierung anzusteuern.

8. Robotersystem (1) nach einem der Ansprüche 1 bis 7,
wobei die Steuereinheit (5) dazu ausgeführt ist, die zur jeweiligen ausgewählten Richtung zugehörigen Komponenten der Transponierten der Jacobimatrix durch Abfahren einer Vielzahl von Posen durch die Teilmenge der Glieder (9) im Nullraum und durch Ermitteln einer jeweiligen Transponierten der für eine jeweilige Pose aktuellen Jacobimatrix und durch Vergleichen der Transponierten der Jacobimatritzen für die Vielzahl der Posen miteinander und durch Auswählen einer der Transponierten der Jacobimatritzen gemäß der ersten oder zweiten Metrik zu ermitteln.

9. Robotersystem (1) nach einem der Ansprüche 1 bis 7,
wobei die Steuereinheit (5) dazu ausgeführt ist, die zur jeweiligen ausgewählten Richtung zugehörigen Komponenten der Transponierten der Jacobimatrix durch Simulation einer Vielzahl von Posen der Teilmenge der Glieder (9) im Nullraum und durch Ermitteln einer jeweiligen Transponierten der für eine jeweilige Pose aktuellen Jacobimatrix und durch Vergleichen der Transponierten der Jacobimatritzen für die Vielzahl der Posen miteinander und durch Auswählen einer der Transponierten der Jacobimatritzen gemäß der ersten oder zweiten Metrik zu ermitteln.

10. Verfahren zum Betreiben eines Robotermanipulators (3) mit einer Vielzahl von durch Gelenken miteinander verbundenen Gliedern (9) mit zumindest teilweise zueinander redundanten Freiheitsgraden, sodass zumindest eine Teilmenge der Glieder (9) des Robotermanipulators (3) in einem Nullraum ohne Änderung einer Position und/oder Orientierung eines distalen Endes (11) des Robotermanipulators (3) bewegbar ist, aufweisend die Schritte:

- Erfassen (S1) einer Eingabe eines Anwenders bezüglich zumindest einer ausgewählten Richtung einer Kraft und/oder eines Moments an dem distalen Ende (11) des Robotermanipulators (3) durch eine mit der Steuereinheit (5) verbundene Bedieneinheit (7) und Übermitteln der erfassten Eingabe an die Steuereinheit (5), und **gekennzeichnet durch** den Schritten:

- Ermitteln (S2) von zur jeweiligen ausgewählten Richtung zugehörigen Komponenten einer Transponierten einer Jacobimatrix für eine vorgegebene Position und/oder Orientierung des distalen Endes (11) des Robotermanipulators (3) im Nullraum so, dass eine erste Metrik auf Basis der Komponenten eines aus den folgenden Kriterien erfüllt:
Ungleich null, größer als ein vorgegebener Grenzwert, maximal; und
- Ansteuern (S3) des Robotermanipulators (3) zum Bewegen der Teilmenge von Gliedern (9) im Nullraum zum Einnehmen einer Pose gemäß der ermittelten Komponenten der Transponierten der Jacobimatrix durch die Steuereinheit (5).

**Claims**

1. Robot system (1) with a robot manipulator (3) and with a control unit (5) for the robot manipulator (3) and with a control unit (7), wherein the robot manipulator (3) comprises a plurality of members (9) connected by joints with at least partially redundant degrees of freedom in such a way that at least a subset of the members (9) of the robot manipulator (3) can be moveable within a zero space without changing a position and/or orientation of a distal end (11) of the robot manipulator (3), wherein the control unit (7) is designed to detect an input from a user regarding at least one selected direction of a force and/or a torque at the distal end (11) of the robot manipulator (3) and to transmit the detected input to the control unit (5), **characterized in that**

   the control unit (5) is designed to determine components of a transposed element of a Jacobian matrix belonging to the respective selected direction for a given position and/or orientation of the distal end (11) of the robot manipulator (3) within the zero space in such a way that a first metric based on the components satisfies one of the following criteria: not equal to zero, greater than a predetermined limit value as a maximum; and
   the control unit (5) is designed to control the robot manipulator (3) to move the subset of members (9) within the zero space to assume a pose in accordance with the determined components of the transposed element of the Jacobian matrix.

2. The robot system (1) according to Claim 1, wherein the components of the transposed element of the Jacobian matrix belonging to the respective selected direction are listed in a respective column of Jacobian-matrix transposed elements, wherein the first metric is a vector norm of the respective column.

3. The robot system (1) according to Claim 2, wherein the control unit (5) is designed to determine the respective components of the transposed element of the Jacobian matrix on the basis of a gradient-based search with the respective vector norm as the reverse cost function.

4. Robot system (1) according to any one of the preceding claims, wherein the control unit (5) is designed to determine whether a selection has been made by the user on the control unit (7) and, in the absence of a selection by the user, to determine all components of the transposed element(s) of the Jacobian matrix within the zero space in such a way that a second metric based on all components of the transposed element(s) of the Jacobian matrix satisfies one of the following criteria: Not equal to zero, greater than a predetermined limit value as a maximum.

5. Robot system (1) according to Claim 4, wherein the control unit (5) is designed to determine the respective components of the transposed element(s) of the Jacobian matrix on the basis of a gradient-based search with the determinant of the matrix product from the Jacobian matrix and the transposed element of the Jacobian matrix as the reverse cost function.

6. Robot system (1) according to any one of the Claims 1 to 5, wherein the control unit (5) is designed to control the robot manipulator (3) for moving the subset of members (9) within the zero space to assume the pose in accordance with the determined components of the transposed element(s) of the Jacobian matrix at or after reaching the distal end (11) of the robot manipulator (3) of the specified position and/or orientation.

7. Robot system (1) according to any one of the Claims 1 to 5, wherein the control unit (5) is designed to control the robot manipulator (3) for moving the subset of the members (9) within the zero space to assume the pose in accordance with the determined components of the transposed element(s) of the Jacobian matrix during the approach of the distal end (11) of the robot manipulator (3) to the specified position and/or orientation.

8. Robot system (1) according to any one of Claims 1 to 7, wherein the control unit (5) is designed to determine the components of the transposed element(s) of the Jacobian matrix belonging to the respective selected direction by a subset of the members (9) successively assuming a plurality of poses within the zero space and by determining a respective transposed element(s) of the current Jacobian matrix for a particular pose, and by comparing the transposed element(s) of the Jacobian matrices for the plurality of poses with each other and by selecting one of the transposed elements of the Jacobian matrices in accordance with first or second metric.

9. Robot system (1) according to any one of Claims 1 to 7, wherein the control unit (5) is designed to determine the components of the transposed element of the Jacobian matrix belonging to the respective selected direction by simulating a plurality of poses of the subset of the members (9) within the zero space and by determining a respective transposed element of the current Jacobian matrix for a particular pose, and by comparing the transposed element(s) of the Jacobian matrices for the plurality of poses with each other and by selecting one of the transposed elements of the Jacobian matrices in accordance with first or second metric.

10. Method for operating a robot manipulator (3) with a plurality of members connected by joints (9) with at least partially redundant degrees of freedom in such a way that at least a subset of the members (9) of the robot manipulator (3) can be moved within a zero space without changing a position and/or orientation of a distal end (11) of the robot manipulator (3), comprising the steps:

   - detecting (S1) an input from a user regarding at least one selected direction of a force and/or moment at the distal end (11) of the robot manipulator (3) by an operating unit (7) connected to the control unit (5) and transmitting the detected input to the control unit (5), and **characterized by** the steps:

      - determining (S2) components belonging to the respective selected direction of a transposed element of a Jacobian matrix for a given position and/or orientation of the distal end (11) of the robot manipulator (3) within the zero space in such a way that a first metric based on the components satisfies one of the following criteria:
      not equal to zero, greater than a predetermined limit value as a maximum; and
      - controlling (S3) of the robot manipulator (3) to move the subset of members (9) within the zero space to assume a pose in accordance with the determined components of the transposed element(s) of the Jacobian matrix by the control unit (5).

## Revendications

1. Système robotique (1) avec un manipulateur robotique (3) et avec une unité de commande (5) pour le manipulateur robotique (3) et avec une unité de manipulation (7),

   sachant que le manipulateur robotique (3) comporte une pluralité d'organes (9) reliés entre eux par des articulations avec au moins en partie des degrés de liberté redondants l'un par rapport à l'autre de telle sorte qu'au moins une quantité partielle des organes (9) du manipulateur robotique (3) peut être déplacée dans un espace zéro sans modification d'une position et/ou d'orientation d'une extrémité distale (11) du manipulateur robotique (3),
   sachant que l'unité de manipulation (7) est exécutée pour saisir une entrée d'un opérateur concernant au moins une direction sélectionnée d'une force et/ou d'un couple à l'extrémité distale (11) du manipulateur robotique (3) et pour transmettre l'entrée saisie à l'unité de commande (5),
   **caractérisé en ce que**
   l'unité de commande (5) est exécutée pour déterminer les composantes respectives d'une transposée de matrice jacobienne pour une position et/ou orientation prédéfinie de l'extrémité distale (11) du manipulateur robotique (3) dans l'espace zéro de telle sorte qu'une première métrique sur la base des composantes satisfait à un des critères suivants : inégale à zéro, plus grande qu'une valeur limite prédéfinie, maximale, et
   **en ce que** l'unité de commande (5) est exécutée pour activer le manipulateur robotique (3) pour déplacer la quantité partielle d'organes (9) dans l'espace zéro pour adopter une pose selon les composantes déterminées de la transposée de matrice jacobienne.

**2.** Système robotique (1) selon la revendication 1, sachant que les composantes appartenant à la direction sélectionnée respective de la transposée de matrice jacobienne sont indiquées dans une colonne respective de la transposée de matrice jacobienne, sachant que la première métrique est une norme vectorielle de la colonne respective.

**3.** Système robotique (1) selon la revendication 2, sachant que l'unité de commande (5) est exécutée pour déterminer les composantes respectives de la transposée de matrice jacobienne sur la base d'une recherche basée sur les gradients avec la norme vectorielle respective en tant que fonction de coût inversée.

**4.** Système robotique (1) selon l'une quelconque des revendications précédentes, sachant que l'unité de commande (5) est exécutée pour déterminer, si une sélection a été procédée par l'opérateur sur l'unité de manipulation (7) et en cas de défaillance d'une sélection par l'opérateur, déterminer toutes les composantes de la transposée de matrice jacobienne dans l'espace zéro de telle sorte qu'une deuxième métrique sur la base de tous les composantes de la transposée de matrice jacobienne satisfait à un des critères suivants : inégale à zéro, plus grande qu'une valeur limite prédéfinie, maximale.

**5.** Système robotique (1) selon la revendication 4, sachant que l'unité de commande (5) est exécutée pour déterminer les composantes respectives de la transposée de matrice jacobienne sur la base d'une recherche basée sur les gradients avec les déterminants de produit matriciel émanant de la matrice jacobienne et de la transposée de matrice jacobienne en tant que fonction de coût inversée.

**6.** Système robotique (1) selon l'une quelconque des revendications 1 à 5, sachant que l'unité de commande (5) est exécutée pour activer le manipulateur robotique (3) pour déplacer la quantité partielle d'organes (9) dans l'espace zéro pour adopter la pose selon les composantes déterminées de la transposée de matrice jacobienne en atteignant ou après avoir atteint l'extrémité distale (11) du manipulateur robotique (3) de la position et/ou de l'orientation prédéfinie.

**7.** Système robotique (1) selon l'une quelconque des revendications 1 à 5, sachant que l'unité de commande (5) est exécutée pour activer le manipulateur robotique (3) pour déplacer la quantité partielle d'organes (9) dans l'espace zéro pour adopter la pose selon les composantes déterminées de la transposée de matrice jacobienne pendant l'approche de l'extrémité distale (11) du manipulateur robotique (3) vers la position et/ou l'orientation prédéfinie.

**8.** Système robotique (1) selon l'une quelconque des revendications 1 à 7, sachant que l'unité de commande (5) est exécutée pour déterminer les composantes appartenant à la direction sélectionnée respective de la transposée de matrice jacobienne par éloignement d'une pluralité de poses par la quantité partielle d'organes (9) dans l'espace zéro et par détermination d'une transposée respective de la matrice jacobienne actuelle pour une pose respective et par comparaison de la transposée de matrices jacobiennes pour la pluralité des poses entre elles et par sélection d'une des transposées de matrices jacobiennes selon la première ou la deuxième métrique.

**9.** Système robotique (1) selon l'une quelconque des revendications 1 à 7, sachant que l'unité de commande (5) est exécutée pour déterminer les composantes appartenant à la direction sélectionnée respective de la transposée de matrice jacobienne par simulation d'une pluralité de poses de la quantité partielle d'organes (9) dans l'espace zéro et par détermination d'une transposée respective de la matrice jacobienne actuelle pour une pose respective et par comparaison de la transposée des matrices jacobiennes pour la pluralité des poses entre elles et par sélection d'une des transposées des matrices jacobiennes selon la première ou la deuxième métrique.

**10.** Procédé destiné à faire fonctionner un manipulateur robotique (3) avec une pluralité d'organes (9) reliés entre eux par des articulations avec au moins en partie des degrés de liberté redondants les uns par rapport aux autres de telle sorte qu'au moins une quantité partielle des organes (9) du manipulateur robotique (3) peut être mobile dans un espace zéro sans modification d'une position et/ou d'orientation d'une extrémité distale (11) du manipulateur robotique (3), comportant les étapes de :

- saisie (S1) d'une entrée d'un opérateur concernant au moins une direction sélectionnée d'une force et/ou d'un couple à l'extrémité distale (11) du manipulateur robotique (3) par une unité de manipulation (7) reliée à l'unité de commande (5) et transmission de l'entrée saisie à l'unité de commande (5) et **caractérisé par** les étapes de :

- détermination (S2) des composantes appartenant à la direction sélectionnée respective d'une transposée d'une matrice jacobienne pour une position et/ou une orientation prédéfinie de l'extrémité distale (11) du manipulateur robotique (3) dans l'espace zéro de telle sorte qu'une première métrique sur la base des composantes satisfait à un des critères suivants :

inégale à zéro, plus grande qu'une valeur limite prédéfinie, maximale, et

- activation (S3) du manipulateur robotique (3) pour déplacer la quantité partielle d'organes (9) dans l'espace zéro afin d'adopter une pose selon les composantes déterminées de la transposée de matrice jacobienne par l'unité de commande (5).

Fig. 1

| S1 |
|----|
| S2 |
| S3 |

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202019102430 U1

- DE 102015009151 A1

**In der Beschreibung aufgeführte Nicht-Patentliteratur**

- **FICUCIELLO FANNY et al.** Variable Impedance Control of Redundant Manipulators for Intuitive Human-Robot Physical Interaction. *IEEE TRANSACTIONS ON ROBOTICS,* 01. August 2015, vol. 31 (4), 850-863